# EUROPEAN PATENT APPLICATION

(11) **EP 4 343 519 A1**
(43) Date of publication of application: **27.03.2024**
(21) Application number: 22866738.2
(22) Date of filing: 09.09.2022
(51) Int. Cl.: G06F 3/0483

(54) **CONTROL DISPLAY METHOD AND APPARATUS, DEVICE AND MEDIUM**

(30) Priority: 10.09.2021 CN 202111062446
(71) Applicant: Beijing Zitiao Network Technology Co., Ltd., Beijing 100190 (CN)
(72) Inventor: SUN, Yujie, Beijing 100086 (CN); XU, Qicheng, Beijing 100086 (CN); ZHANG, Runze, Beijing 100086 (CN); ZHAO, Wen, Beijing 100086 (CN); ZHAI, Ying, Beijing 100086 (CN)
(74) Representative: Dentons UK and Middle East LLP
(86) International application number: PCT/CN2022/117975
(87) International publication number: WO 2023/036277

(57) **Abstract**

The present disclosure relates to a control display method and apparatus, a device and a medium. The content display method comprises: display a first page, and a video player plays first video content in the first page; when a first content stream switching operation on the first video content is detected, the video player displays first target content corresponding to the first content stream switching operation, wherein the first target content is non-video content, and the first target content is associated with the first video content.

## Description

This application claims the priority to Chinese Patent Application No. 202111062446.3 titled "CONTROL DISPLAY METHOD AND APPARATUS, DEVICE AND MEDIUM", filed on September 10, 2021 with the China National Intellectual Property Administration (CNIPA), which is incorporated herein by reference in its entirety.

### FIELD

The present disclosure relates to the technical field of media, and in particular to a method and an apparatus for displaying content, a device and a medium.

### BACKGROUND

In daily life, users often browse media content using electronic devices for leisure and entertainment.

Currently, different types of media content are required to be displayed on different types of interfaces. In a process of browsing the media content, if a user browses different types of media content sequentially, an electronic device is required to frequently switch among different types of interfaces. Thus, it is difficult for the user to achieve an immersive viewing effect, affecting user experience.

### SUMMARY

In order to solve or at least partially solve the above technical problem, a method and apparatus for displaying content, a device and a medium are provided according to the present disclosure.

In a first aspect, a method for displaying content is provided according to the present disclosure. The method includes:
displaying a first interface, where first video content is played through a video player on the first interface; and
displaying first target content corresponding to a first content stream switching through the video player, in response to a detection of the first content stream switching on the first video content, where the first target content is non-video content, and is associated with the first video content.

In a second aspect, an apparatus for displaying content is provided according to the present disclosure. The apparatus includes:
a first display unit configured to display a first interface, where first video content is played through a video player on the first interface; and
a second display unit configured to display first target content corresponding to a first content stream switching through the video player, in response to a detection of the first content stream switching on the first video content, where the first target content is non-video content, and is associated with the first video content.

In a third aspect, an electronic device is provided according to the present disclosure. The electronic device includes: a processor; and a memory configured to store executable instructions. The processor is configured to read the executable instructions from the memory and execute the executable instructions to perform the method for displaying content according to the first aspect.

In a fourth aspect, a computer-readable storage medium is provided according to the present disclosure. The computer-readable storage medium stores a computer program. The computer program, when executed by a processor, causes the processor to perform the method for displaying content according to the first aspect.

### BRIEF DESCRIPTION OF THE DRAWINGS

The above and other features, advantages and aspects of the embodiments of the present disclosure will be more apparent in conjunction with the drawings and with reference to the following embodiments. The same or similar reference numerals throughout the drawings represent the same or similar elements. It should be understood that the drawings are schematic and the components and elements are unnecessarily drawn to scale.
Figure 1 is a schematic flow chart of a method for displaying content according to an embodiment of the present disclosure;
Figure 2 is a schematic diagram of a content stream playing interface according to an embodiment of the present disclosure;
Figure 3 is a schematic diagram of a content stream playing interface according to another embodiment of the present disclosure;
Figure 4 is schematic diagram of a graphic display interface according to an embodiment of the present disclosure;
Figure 5 is a schematic diagram of a graphic display interface according to another embodiment of the present disclosure;
Figure 6 is a schematic diagram of a content stream playing interface according to another embodiment of the present disclosure;
Figure 7 is a schematic diagram of a background floating layer according to an embodiment of the present disclosure;
Figure 8 is a schematic diagram of a content floating layer according to an embodiment of the present disclosure;
Figure 9 is a schematic structural diagram of an apparatus for displaying content according to an embodiment of the present disclosure; and
Figure 10 is a schematic structural diagram of an electronic device according to an embodiment of the present disclosure.

### DETAILED DESCRIPTION OF EMBODIMENTS

Embodiments of the present disclosure are described in detail hereinafter with reference to the drawings. Although the drawings show some embodiments of the present disclosure, it should be understood that the present disclosure may be embodied in various forms and should not be construed as being limited to the embodiments set forth herein. The embodiments described in the present disclosure are intended to understand the present disclosure thoroughly and completely. It should be understood that the drawings and the embodiments of the present disclosure are only schematic, and are not intended to limit the protection scope of the present disclosure.

It should be understood that, steps described in the implementation of the method of the present disclosure may be performed in different orders and/or performed in parallel. In addition, the implementation of the method may include additional steps and/or the shown steps may be omitted. The scope of the present disclosure is not limited thereto.

Term "including" and variations thereof adopted herein is inclusive, that is "including but not limited to". The term "based on" means "at least partially based on". The term "an embodiment" means "at least one embodiment", and the term "another embodiment" means "at least one another embodiment". The term "some embodiments" means "at least some embodiments". Definitions of other terms are provided hereinafter.

It should be noted that, the terms "first", "second" and so on mentioned in the present disclosure are only used to distinguish different apparatuses, modules or units, rather than limit an order or interdependence of functions performed by the apparatus, modules or units.

It should be noted that, the terms "a" and "multiple" mentioned in the present disclosure are schematic rather than restrictive, and should be understood as "one or more" by those skilled in the art, otherwise explicitly illustrated in the context.

The names of messages or information exchanged between multiple apparatuses in the embodiments of the present disclosure are only for illustrative purposes, and are not intended to limit the scope of the messages or information.

A method and an apparatus for displaying content, a device and a medium are provided according to embodiments of the present disclosure, to provide a user with an immersive viewing effect.

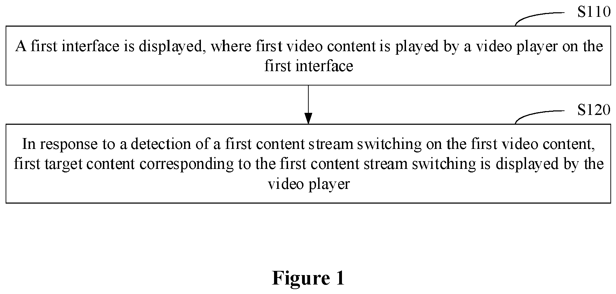

The method for displaying content according to an embodiment of the present disclosure is described in conjunction with Figures 1 to 8.

Figure 1 is a schematic flow chart of a method for displaying content according to an embodiment of the present disclosure.

In the embodiment of the present disclosure, the method for displaying the content may be performed by an electronic device. The electronic device may include, but be not limited to, a mobile terminal, such as a mobile phone, a laptop, a digital broadcast receiver, a personal digital assistant (PDA), a portable android device (PAD), a portable multimedia player (PMP), an in-vehicle terminal (such as an in-vehicle navigation terminal), and a wearable device; and a fixed terminal such as a digital TV, a desktop computer, and a smart home device.

As shown in Figure 1, the method for displaying the content may include the following steps S110 and S 120.

In step S110, a first interface is displayed, where first video content is played by a video player on the first interface.

In an embodiment of the present disclosure, the electronic device may display the first interface, and play the first video content to be viewed by a user through the video player on the first interface.

In an embodiment, the first video content may belong to a target media content stream. The target media content stream may include multiple different types of media content.

In an embodiment, the first interface may be a content stream playing interface or other interface with a video playing function, which is not limited herein. Specifically, the video content may be played in full screen through the video player on the first interface.

The following description is made with an example where the first interface is the content stream playing interface.

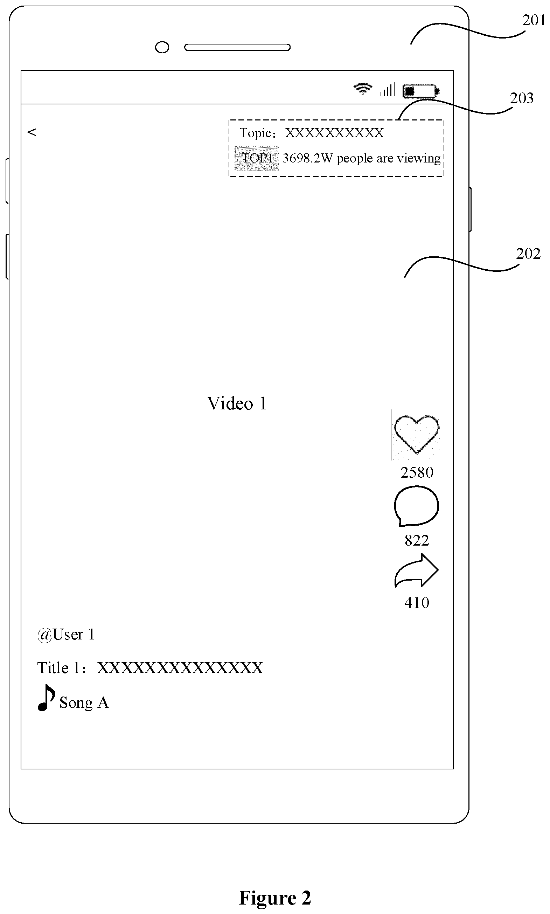

Figure 2 is a schematic diagram of a content stream playing interface according to an embodiment of the present disclosure.

As shown in Figure 2, an electronic device 201 may display a content stream playing interface 202. A video 1 in a media content stream may be played through the video player on the content stream playing interface 202. For example, the user may open the content stream playing interface 202 on the electronic device 201. The video 1 may be automatically played through the video player when the electronic device 201displays the content stream playing interface 202.

As shown in Figure 1, in step 5120, in response to a detection of a first content stream switching on the first video content, first target content corresponding to the first content stream switching is displayed by the video player.

In an embodiment of the present disclose, after the user views the first video content or when the user is not interested in the first video content, the user may input the first content stream switching on the first video content to the electronic device, so that the electronic device can switch the displayed media content. After the first content stream switching on the first video content is detected, the electronic device may display the first target content corresponding to the first content stream switching through the video player.

The first content stream switching may include an operation for triggering a switch from the first video content to other media content in the target media content stream, such as double clicking, sliding, a speech control, or an emoticon control on the first video content. The operation is not limited herein.

Furthermore, the first target content may correspond to first media content adjacent to the first video content in the target media content stream, in a switching direction corresponding to the first content stream switching.

For example, the first content stream switching is an upward sliding on the first video content. The display of next media content may be triggered in response to the upward sliding. The first target content may correspond to the first media content next to and adjacent to the first video content in the target media content stream.

In an embodiment of the present disclosure, media contents in the target media content stream may include video content or non-video content, which is not limited herein.

Furthermore, the first target content is the non-video content, which indicates that the first media content may be the non-video content. The first media content may be adjacent to the first video content in the target media content stream in the switching direction corresponding to the first content stream switching, and may be the non-video content.

In these embodiments, the electronic device may directly display the first target content corresponding to the first media content on the first interface through the video player, in response to the detection of the first content stream switching on the first video content.

In some embodiments of the present disclosure, the first target content may include the first media content, that is, the first target content may be the first media content.

In these embodiments, the electronic device may directly display the first media content completely through the video player on the first interface in response to the detected first content stream switching on the first video content.

In some embodiments of the present disclosure, the first target content may include content in association with the first media content.

In these embodiments, the electronic device may directly display the content in association with the first media content through the video player on the first interface, in response to the detection of the first content stream switching on the first video content.

In some embodiments, the content in association with the first media content may include preview content of the first media content.

Specifically, the preview content of the first media content may be a part of the first media content.

In other embodiments, the content in association with the first media content may include association information corresponding to the first target content. The association information may include at least one of publishing information of the first media content or interaction information of the first media content.

Specifically, the publishing information of the first media content may include at least one of a content title or a publisher name of the first media content, which is not limited herein. The interaction information of the first media content may include at least one of liking data, comment data or forwarding data of the first media content, which is not limited herein.

In other embodiments, the content in association with the first media content may further include other content related to the first media content, such as a cover image, which is not limited herein.

In an embodiment of the present disclosure, a resource format of the first target content may include at least one of a text format, an image format, or a format combining a text and an image. That is, a resource format of the first media content may include at least one of the text format, the image format, or the format combining a text and an image.

Specifically, the first media content may be media content in a non-video format, which is obtained in advance from various internet platforms such as a social platform and an information platform. Therefore, the resource format of the first target content corresponding to the first media content may also be the non-video format.

The following description is made with an example where the first target content is the preview content of the first media content, and the resource format of the first media content is the text format.

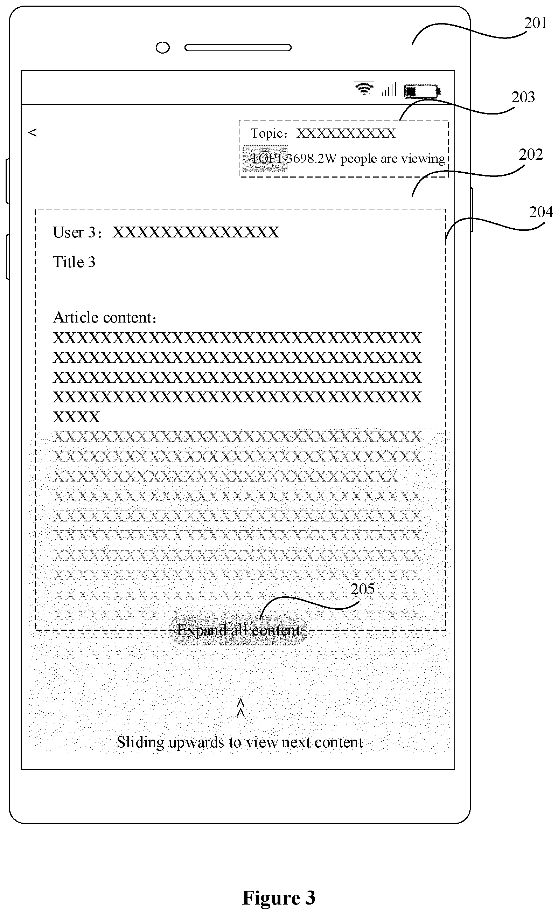

As shown in Figure 2, in the process of the electronic device 201 playing the video 1 through the video player, if the user wants to view next media content, the user may slide the video 1 upwards, such that the electronic device 201 may switch the displayed media content, as shown in Figure 3.

Figure 3 is a schematic diagram of a content stream playing interface according to another embodiment of the present disclosure.

As shown in Figure 3, the electronic device 201 may continue to display preview content 204 of an article next to and adjacent to the video 1 in the media content stream, through the video player on the content stream playing interface 202.

In an embodiment of the present disclosure, the first target content may be associated with the first video content. The first media content corresponding to the first target content is associated with the first video content.

The first media content associated with the first video content may refer to the first media content having content relevance to the first video content. For example, the first media content and the first video content have the same topic, the first media content and the first video content belong to the same hot event, or the first media content and the first video content have the same search term, to improve the content relevance of the media content viewed by the user, further providing the user with the immersive viewing effect.

Therefore, in an embodiment of the present disclosure, in response to the detection of the first content stream switching on the first video content, the electronic device may display the first target content corresponding to the first media content through the video player. The first media content is adjacent to the first video content in the switching direction corresponding to the first content stream switching in the target media content stream, has content relevance to the first video content, and is the non-video content.

In the embodiments of the present disclosure, when the first interface is displayed, the first video content may be played through the video player on the first interface. In response to the detection of the first content stream switching on the first video content, the first target content that corresponds to the first content stream switching and is associated with the first video content may be displayed through the video player. The first target content is the non-video content. Therefore, different types of media content may be displayed on one interface. Even if the user browses the different types of media content, such as browsing the video content first and then browsing the non-video content, the user is not required to frequently switch between different types of interfaces, thereby preventing user viewing effect from being interrupted, providing the user with the immersive viewing effect and improving the user experience.

In some embodiments of the present disclosure, as shown in Figure 1, after the step S120, the method for displaying the content may further include: in response to a detection of a third content stream switching on the first target content, displaying third target content corresponding to the third content stream switching through the video player.

Specifically, after the user views the first target content or when the user is not interested in the first target content, the user may input the third content stream switching on the first target content to the electronic device, so that the electronic device may switch the displayed media content. In response to the third content stream switching on the first target content, the electronic device may display the third target content corresponding to the third content stream switching through the video player.

The third content stream switching may include an operation for triggering a switch from the first target content to other media content in the target media content stream, such as double clicking, sliding, a speech control or an emoticon control on the first target content. The operation is not limited herein.

Furthermore, the third target content may correspond to third media content adjacent to the first media content in the target media content stream, in a switching direction corresponding to the third content stream switching.

For example, the third content stream switching is an upward sliding on the first target content. The display of next media content may be triggered in response to the upward sliding. The third target content may correspond to the third media content next to and adjacent to the first media content in the target media content stream.

Furthermore, the third target content may be the non-video content, which indicates that the third media content may be the non-video content. That is, the third media content may be adjacent to the first media content in the switching direction corresponding to the third content stream switching in the target media content stream, and may be the non-video content.

In these embodiments, the electronic device may directly display the third target content corresponding to the third media content on the first interface through the video player, in response to the detection of the third content stream switching on the first target content.

In these embodiments, the third target content may include the third media content, or content in association with the third media content. A resource format of the third target content may include at least one of a text format, an image format, or a format combining a text and an image, which is not repeated herein.

In an embodiment of the present disclosure, the third target content may be associated with the first video content. The third media content corresponding to the third target content is associated with the first video content.

The third media content associated with the first video content may refer to the third media content having content relevance to the first video content, which is not repeated herein.

Therefore, in the embodiments of the present disclosure, the third target content corresponding to the third media content may be displayed through the video player. The third media content is adjacent to the first media content in the target media content stream in the switching direction corresponding to the third content stream switching, has content relevance to the first video content, and is the non-video content, thereby providing the user with the immersive viewing effect, further improving the user experience.

In other embodiments of the present disclosure, after the step S 120, the method for displaying the content may further include: in response to the detection of the third content stream switching on the first target content, playing third video content corresponding to the third content stream switching through the video player.

The third content stream switching may include an operation for triggering a switch from the first target content to other media content in the target media content stream, such as double clicking, sliding, a speech control, or an emoticon control on the first target content. The operation is not limited herein.

Furthermore, the third video content may be video content adjacent to the first media content in the switching direction corresponding to the third content stream switching in the target media content stream.

For example, the third content stream switching is a downward sliding on the first target content. The display of previous media content may be triggered in response to the downward sliding. The third video content may be video content previous to and adjacent to the first media content in the target media content stream, that is, may be the first video content.

In an embodiment of the present disclosure, the third video content is associated with the first video content.

The third media content associated with the first video content may refer to the third media content having content relevance to the first video content, which is not repeated herein.

Therefore, in the embodiments of the present disclosure, the third video content may be automatically played through the video player, and the third video content is adjacent to the first media content in the switching direction corresponding to the third content stream switching in the target media content stream, and has content relevance to the first video content, thereby providing the user with the immersive viewing effect, further improving the user experience.

In another embodiment of the present disclosure, in the case where the first target content includes the content in association with the first media content and the content in association with the first media content includes the preview content of the first media content, after the step S120, the method for displaying the content may further include: displaying a first control on the video player, where the first control is used to trigger a display of the first media content in a second interface.

In an embodiment of the present disclosure, after the electronic device displays the preview content of the first media content through the video player, in order to enable the user to view the first media content completely, the electronic device may further display, through the video player, the first control for triggering the display of the first media content in the second interface. Thus, the user can view the first media content completely.

The first control may be an icon, a button, and the like for triggering the display of the first media content in the second interface, which is not limited herein.

As shown in Figure 3, the electronic device 201 may further display a button "expand all content" 205 through the video player on the content stream playing interface 202 in a superimposed manner. Thus, the button "expand all content" 205 is displayed by superimposing on the preview content 204 of the article, to prompt the user to use the button "expand all content" 205 to display the article completely.

In some embodiments of the present disclosure, after the first control is displayed on the video player, the method for displaying the content may further include: switching a display interface from the first interface to a second interface in response to a detection of a first triggering on the first control; and displaying the first media content on the second interface.

In the embodiment of the present disclosure, when the user wants to view the first media content completely, the user may input the first triggering on the first control to the electronic device. Thus, the electronic device can display the first media content completely. In response to the detection of the first triggering on the first control, the electronic device may switch the display interface from the first interface to the second interface, and display the first media content completely on the second interface.

In an embodiment, the first triggering may include an operation for triggering the complete display of the first media content, such as clicking, double clicking, long pressing, a speech control, or an emoticon control on the first control. The first triggering is not limited herein.

In an embodiment, the second interface may be a graphic display interface or other interface with a graphic display function other than the content stream playing interface, which is not limited herein.

The following description is made with an example where the second interface is the graphic display interface.

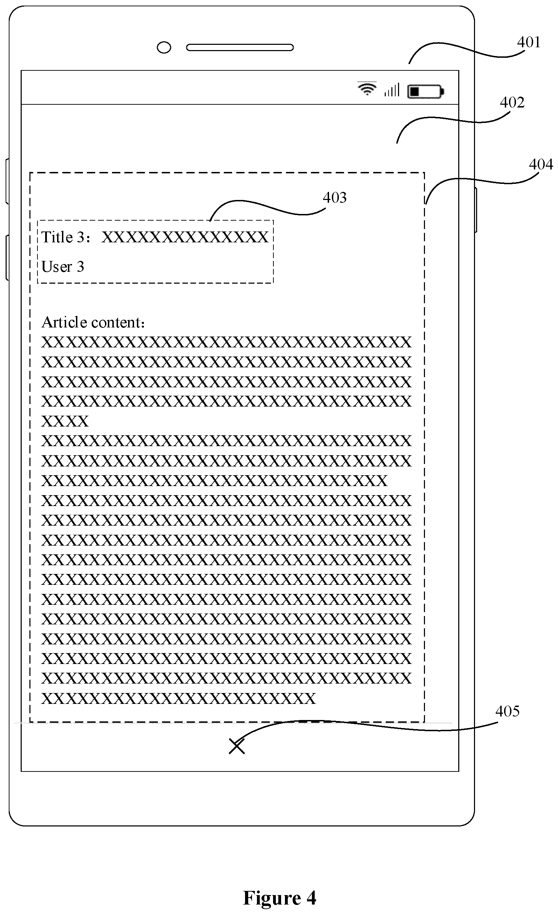

As shown in Figure 3, in the process of the electronic device 201 displaying the preview content 204 of the article through the video player, if the user wants to view the article completely, the user may click the button "expand all content" 205, such that the electronic device 201 can switch the content stream playing interface 202 to the graphic display interface to display the article completely, as shown in Figure 4.

Figure 4 is schematic diagram of a graphic display interface according to an embodiment of the present disclosure.

As shown in Figure 4, the electronic device 401 may display a graphic display interface 402, and an article may be completely displayed on the graphic display interface 402.

Therefore, in the embodiments of the present disclosure, when the user wants to view the first media content completely, the second interface may be jumped to, and the first media content may be displayed in the second interface, which can improve a reading experience of the user in the process of viewing the first media content completely.

In other embodiments of the present disclosure, in the case where only a part area of the first media content can be displayed on the second interface, after the first media content is displayed on the second interface, the method for displaying the content may further include: in the case where a preset area of the first media content is displayed on the second interface, in response to a detection of a second content stream switching on the first media content, displaying second target content corresponding to the second content stream switching through the video player.

In an embodiment of the present disclosure, the preset area may be a predetermined area. For example, the preset area may be a tail area, which is not limited herein.

Specifically, in the case where the user has viewed the preset area of the first media content, if the user wants to view other media content, the user may input the second content stream switching on the first media content to the electronic device, so that the electronic device can switch the displayed media content. In response to the detection of the second content stream switching on the first media content, the electronic device may jump from the second interface to a fourth interface, and display the second target content corresponding to the second content stream switching through the video player on the fourth interface.

The second content stream switching may include an operation for triggering a switch from the first media content to other media content in the target media content stream, such as double clicking, sliding, a speech control, or an emoticon control on the first media content. The operation is not limited herein.

In an embodiment, the fourth interface may be of the same interface type as the first interface, or may be the first interface, which is not repeated herein.

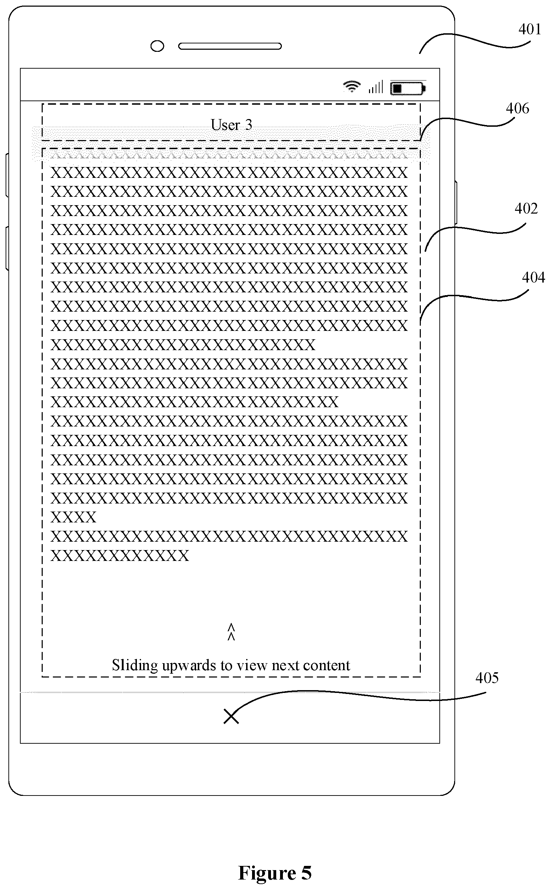

Figure 5 is a schematic diagram of a graphic display interface according to another embodiment of the present disclosure.

As shown in Figure 5, the electronic device 401 may display a graphic display interface 402, and a tail of the article may be displayed on the graphic display interface 402. In such case, if the user wants to view next media content, the user may slide the article upwards, so that the electronic device 401 may switch the displayed media content to a next content stream playing interface.

Furthermore, the second target content may correspond to second media content adjacent to the first media content in the target media content stream, in the switching direction corresponding to the second content stream switching.

For example, the second content stream switching is an upward sliding on the first media content, and the display of next media content may be triggered in response to the upward sliding. The second target content may correspond to the second media content next to and adjacent to the first media content in the target media content stream. The second target content may be the foregoing third target content, and the second media content may be the foregoing third media content.

Furthermore, the second target content may be the non-video content, which indicates that the second media content may be the non-video content. The second media content may be media content adjacent to the first media content in the target media content stream in the switching direction corresponding to the second content stream switching, and may be the non-video content.

In these embodiments, in response to the detection of the second content stream switching on the first media content, the electronic device may switch the second interface to the fourth interface, and display the second target content corresponding to the second media content through the video player on the fourth interface.

In these embodiments, the second target content may include the second media content or content in association with the second media content. A resource format of the second target content may include at least one of the text format, the image format, or the format combining a text and an image, which is not repeated herein.

In an embodiment of the present disclosure, the second target content may be associated with the first video content, which indicates that the second media content corresponding to the second target content is associated with the first video content.

The second media content associated with the first video content may refer to the second media content having content relevance to the first video content, which is not repeated herein.

Therefore, in the embodiments of the present disclosure, in the process of the user viewing the first media content on the second interface, the second interface may directly jump to the fourth interface, and the second target content corresponding to the second media content is displayed on the fourth interface. The second media content is adjacent to the first media content in the switching direction corresponding to the second content stream switching in the target media content stream, has content relevance to the first video content, and is the non-video content, thereby providing the user with the immersive viewing effect, further improving the user experience.

In some embodiments of the present disclosure, after the first media content is displayed on the second interface, the method for displaying the content may further include: in a case where the preset area of the first media content is displayed on the second interface, in response to the detection of the second content stream switching on the first media content, playing second video content corresponding to the second content stream switching through the video player.

The second content stream switching may include an operation for triggering a switch from the first media content to other media content in the target media content stream, such as double clicking, sliding, a speech control, or an emoticon control on the first media content. The operation is not limited herein.

Furthermore, the second video content may be video content adjacent to the first media content in the switching direction corresponding to the second content stream switching in the target media content stream.

For example, the second content stream switching is a downward sliding on the first media content. The display of previous media content may be triggered in response to the downward sliding. The second video content may be video content previous to and adjacent to the first media content in the target media content stream, that is, may be the first video content.

In an embodiment of the present disclosure, the second video content is associated with the first video content.

The second media content associated with the first video content may refer to the second media content having content relevance to the first video content, which is not repeated herein.

Therefore, in the embodiments of the present disclosure, in the process of the user viewing the first media content on the second interface, the second interface may directly jump to the fourth interface, and the second video content is automatically played on the fourth interface. The second video content is adjacent to the first media content in the switching direction corresponding to the second content stream switching in the target media content stream, and has content relevance to the first video content, thereby providing the user with the immersive viewing effect, further improving the user experience.

In some embodiments of the present disclosure, only a part area of the first media content may be displayed on the second interface. In this case, if the first media content is displayed on the second interface and the preset area of the first media content is not displayed on the second interface, the electronic device cannot switch to the next media content in response to the second content stream switching on the first media content.

For example, the second content stream switching is an upward sliding on the first media content, and the preset area is the tail area. In the case where the electronic device does not display the tail area of the first media content on the second interface, in response to the detection of the upward sliding on the first media content, the electronic device may update an area of the first media content displayed on the second interface, until the electronic device displays the tail area of the first media content on the second interface. That is, after browsing the first media content is completed, the display of the next media content may be triggered when the electronic device detects the upward sliding on the first media content. Thus, the second content stream switching may be the same as the sliding for updating the area of the first media content, to achieve a smooth viewing effect of the user.

Therefore, in the embodiment of the present disclosure, the process of the user viewing the first media content on the second interface may not be interrupted due to an incorrect operation, which can further improve the user experience.

It should be noted that the first content stream switching, the second content stream switching, and the third content stream switching may be the same. For example, the first content stream switching, the second content stream switching, and the third content stream switching may be the same gesture, such as the upward sliding. As a result, the user may switch among different types of media content using the same gesture, thereby further preventing the viewing effect of the user from being interrupted.

In some embodiments of the present disclosure, the first media content is displayed on the second interface by: displaying association information corresponding to the first target content and the first media content in a first display area of the second interface.

The first display area may be a main display area of the second interface.

In an embodiment, the association information includes at least one of publishing information or interaction information, which is not repeated herein.

As shown in Figure 4, after switching from the content stream playing interface to the graphic display interface 402, the electronic device 401 may display association information 403 of an article in a main display area 404 of the graphic display interface 402, such as a content title "title 3: XXXXXXXXXXXXXX" and a publisher name "user 3", and display a head area of the article at the association information 403 of the article in the main display area 404.

In some embodiments, after the first media content is displayed on the second interface, the method for displaying the content may further include: in response to a detection of the sliding on the first display area, updating content displayed in the first display area based on a sliding direction corresponding to the sliding; and in the case where the association information is updated to move out of the first display area, displaying the association information in a second display area of the second interface.

In an embodiment, the sliding may include the upward sliding and the downward sliding.

In the case where the sliding is the upward sliding, in response to the detection of the upward sliding on the first display area, the electronic device updates the content displayed in the first display area using an area in front of a display area of the first media content currently displayed in the first display area. In the case where the sliding is the downward sliding, in response to the detection of the downward sliding on the first display area, the electronic device updates the content displayed in the first display area using an area behind the display area of the first media content currently displayed in the first display area.

Furthermore, in the process of the electronic device updating the content displayed in the first display area, if the association information is updated to move out of the first display area, the electronic device may display the association information fixedly in the second display area of the second interface, and may stop displaying the association information in the second display area when the association information is moved back into the first display area.

The second display area may be a head area or a tail area of the second interface.

Referring to Figure 5 again, the content title and the publisher name of the article are not displayed in the main display area 404 of the graphic display interface 402. In this case, the publisher name "user 3" may be fixedly displayed in a head area 406.

Therefore, in the embodiment of the present disclosure, association information concerned by the user may be constantly displayed on the second interface, further improving the user experience.

In some embodiments of the present disclosure, after the first media content is displayed on the second interface, the method for displaying the content may further include: displaying a second control on the second interface; and in response to a detection of a second triggering on the second control, jumping back to the first interface from the second interface, to resume the display of the first target content on the first interface.

In an embodiment of the present disclosure, after a display interface is switched from the first interface to the second interface, the electronic device may display the second control on the second interface in the process of displaying the second interface, so that the user can input the second triggering on the second control to the electronic device when the user wants to view the first interface. In response to the second triggering on the second control, the electronic device may jump back to the first interface from the second interface, and continue displaying the first target content on the first interface.

The second control may be an icon, a button, and the like for triggering a switch from the second interface to the first interface, which is not limited herein.

In an embodiment, the second triggering may include an operation for triggering the switch from the second interface to the first interface, such as clicking, double clicking, long pressing, a speech control, or an emoticon control on the second control. The second triggering is not limited herein.

As shown in Figures 4 and 5, the graphic display interface 402 may further display a button "x" 405. The user may click the button 405 "×", so that the electronic device 401 switches from the graphic display interface 402 to the content stream playing interface, as shown in Figure 3.

Therefore, in an embodiment of the present disclosure, a convenient return operation entrance can be provided for the user, to conveniently return to the content stream playing interface to continue viewing other media content in the process of viewing the first media content completely, further improving the user experience.

In another embodiment of the present disclosure, the first video content and the first target content belong to a target media sequence corresponding to a target topic. The target media sequence is the foregoing target media content stream, that is, the target media content stream corresponds to the target topic.

In an embodiment, each media content in the target media sequence, i.e., the target media content stream belongs to the target topic. Thus, the first media content, the second media content, and the third media content also belong to the target topic.

In some embodiments of the present disclosure, as shows in Figure 1, before the step S110, the method for displaying the content may further include: displaying the target topic on a third interface.

In some embodiments, the third interface may be the content stream playing interface, or other interface with a video playing function, which is not limited herein. Specifically, any video content may be played in full screen through the video player on the third interface, and the target topic may be displayed at a target location of the third interface.

The target location may be a predetermined location, such as a bottom of the third interface, which is not limited herein.

The following description is made with an example where the third interface is the content stream playing interface.

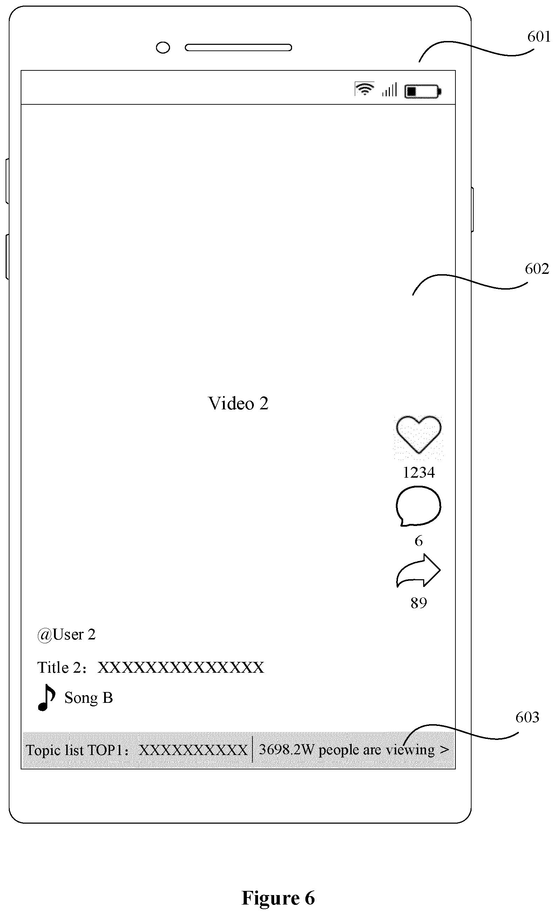

Figure 6 is a schematic diagram of a content stream playing interface according to another embodiment of the present disclosure.

As shown in Figure 6, an electronic device 601 may display a content stream playing interface 602. A video 2 may be played through the video player on the content stream playing interface 602. For example, the user may open the content stream playing interface 602 on the electronic device 601, and the video 2 may be automatically played through the video player when the electronic device 601 displays the content stream playing interface 602.

Furthermore, topic information 603 of the target topic may be displayed in a broadcasting manner at a bottom of the content stream playing interface 602.

In other embodiments, the third interface may be a topic display interface, or other interface that can display the target topic, which is not limited herein.

In some embodiments of the present disclosure, as shown in Figure 1, the step S110 may include: displaying a first interface corresponding to a target topic in response to a detection of a third triggering on the target topic.

In an embodiment, the third triggering may include an operation for triggering entry of the first interface corresponding to the target topic, such as clicking, double clicking, long pressing, a speech control, or an emoticon control on a control to which the target topic belongs. The operation is not limited herein.

In these embodiments, the first interface is used to display each media content in the target media sequence corresponding to the target topic.

As shown in Figures 2 and 3, the content stream playing interface 202 may further display topic information 203 of the target topic fixedly, to prompt the user that media content displayed on the content stream playing interface 202 is related to the target topic.

In some embodiments of the present disclosure, before the first target content corresponding to the first content stream switching is displayed through the video player in the step S120, the method for displaying the content may further include: determining an image and/or an audio related to the target topic; and determining a background image when the video player displays the first target content based on the image and/or determining a background audio when the video player displays the first target content based on the audio.

In an embodiment of the present disclosure, the electronic device may determine the image and/or the audio related to the target topic, and determine the background image displayed and/or the background audio played when the video player displays the first target content based on the image. Thus, the background image is displayed below the first target content and the background audio is played when the first target content is displayed through the video player.

In some embodiments, the electronic device may select an image with the maximum number of occurrences in the media content corresponding to the target topic, or an image with the maximum number of comments of users in the media content corresponding to the target topic. Then, the image is arranged at a top area of a background canvas, a main color of the image is extracted, and a background floating layer with a first transparent area is generated based on the main color. The background floating layer is filled with the main color, and the image may be located in the first transparent area. Furthermore, the background floating layer is covered on the background canvas, to obtain the background image when the video player displays the first target content.

In an embodiment, a transparency of the first transparent area may be a predetermined fixed value. Alternatively, a transparency of the first transparent area may be a gradient value which may gradually change from the top to the bottom of the first transparent area. The transparency of the top of the first transparent area may be preset to a starting transparency, and the transparency of the bottom of the first transparent area may be set to zero.

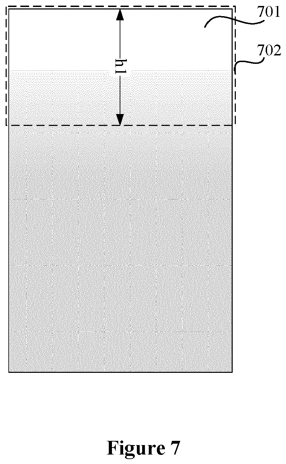

Figure 7 is a schematic diagram of a background floating layer according to an embodiment of the present disclosure. As shown in Figure 7, a background floating layer 701 may have a transparent area 702, and a transparency of the transparent area 702 may be a gradient value which may gradually change.

Furthermore, in the case where the first target content includes content in association with the first media content and the content in association with the first media content includes the preview content of the first media content, the electronic device may display the first media content by superimposing the first media content on the background image, and display a content floating layer by superimposing the content floating layer on the first media content. The content floating layer has a second transparent area. A part of the first media content located in the second transparent area may form the preview content of the first media content. In addition, the electronic device may further display the first control by superimposing the first control on the content floating layer.

Specifically, the electronic device may determine a floating color of the content floating layer based on a main color of the image related to the target topic. For example, if the main color belongs to a dark color scheme, the floating color may be black. If the main color belongs to a light color scheme, the floating color may be white. Then, the electronic device may generate the content floating layer with a second transparent area based on the floating color. The content floating layer is filled with the floating color, and the preview content of the first media content may be located in the second transparent area.

In an embodiment, a transparency of the second transparent area may be a predetermined fixed value. Alternatively, a transparency of the second transparent area may be a gradient value which may gradually change from the top to the bottom of the second transparent area. The transparency of the top of the second transparent area may be preset to a starting transparency, and a transparency of the bottom of the second transparent area may be set to zero.

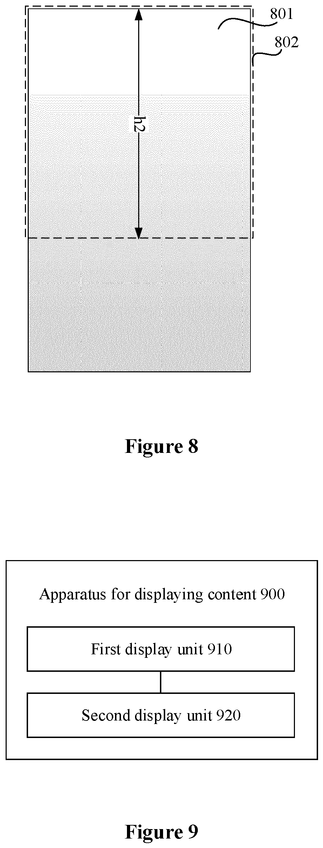

Figure 8 is a schematic diagram of a content floating layer according to an embodiment of the present disclosure. As shown in Figure 8, a content floating layer 801 may have a transparent area 802, and a transparency of the transparent area 802 may be a gradient value which may gradually change.

Furthermore, in order to achieve a better playing effect when the first target content is displayed through the video player, a size of the first transparent area of the background floating layer is smaller than a size of the second transparent area of the content floating layer.

As shown in Figure 7, the transparent area 702 has a height h1. As shown in Figure 8, the transparent area 802 has a height h2. The height h1 may be less than the height h2.

In an embodiment, the height of the first transparent area and the height of the second transparent area may have a preset height ratio. The height of the first transparent area and the height of the second transparent area may be determined based on a size of a display screen of the electronic device, so that the background image and the preview content can be self-adjusted.

In other embodiments, the electronic device may determine a type of the target topic, determine an audio related to the target topic based on the type of the target topic, and determine the audio as a background audio.

In an embodiment, the type of the target topic may include an arbitrary emotional type. Furthermore, the electronic device may perform emotion analysis on an article corresponding to the target topic, to determine an emotional type to which the target topic belongs. Alternatively, the electronic device may perform emotion analysis on comments corresponding to the target topic, to determine an emotional type to which the target topic belongs.

Furthermore, the electronic device may store multiple audios in advance. The audios correspond to the respective emotional types. After determining the emotional type to which the target topic belongs, the electronic device may find from multiple pre-stored audios an audio corresponding to the emotional type to which the target topic belongs, and then determine the found audio as the background audio.

Therefore, in the embodiments of the present disclosure, the background image and the background audio may be added for the first target content, when the first target content is displayed through the video player. In this way, the first target content is more similar to the video content in the display form, further providing the user with the immersive viewing effect.

In summary, in the method for displaying the content according to the embodiments of the present disclosure, non-video content may be inserted into the video content stream, to form a media content stream. The electronic device plays the media content stream sequentially, and plays the video content and displays the non-video content through the video player. The video content and the non-video content are carried by the same container, keeping an overall structure of a display interface unchanged. In addition, the user may switch between the video content and the non-video content using the same operation, thereby providing the user with the immersive viewing effect and improving the user experience. When the non-video content is displayed through the video player, the preview content of the non-video content may be displayed first, and the non-video content may be completely displayed in response to triggering a jump display operation by the user. Alternatively, the non-video content is directly switched to next media content in response to a triggering operation of the user without preventing the user from switching media content, providing the user with a decision-making power to determine whether to view the non-video content deeply, thereby further improving the user experience.

An apparatus for displaying content is further provided according to an embodiment of the present disclosure, which is explained in conjunction with Figure 9 below.

Figure 9 is a schematic structural diagram of an apparatus for displaying content according to an embodiment of the present disclosure.

In an embodiment of the present disclosure, the apparatus for displaying the content may be an electronic device. The electronic device may include but is not limited to, a mobile terminal, such as a mobile phone, a laptop, a digital broadcast receiver, a PDA, a PAD, a PMP, an in-vehicle terminal (such as an in-vehicle navigation terminal), and a wearable device; and a fixed terminal such as a digital TV, a desktop computer, and a smart home device.

As shown in Figure 9, the apparatus 900 for displaying the content may include a first display unit 910 and a second display unit 920.

The first display unit 910 may be configured to display a first interface. First video content is played through a video player on the first interface.

The second display unit 920 may be configured to display first target content corresponding to a first content stream switching through the video player, in response to a detection of the first content stream switching on the first video content. The first target content is non-video content, and is associated with the first video content.

In the embodiments of the present disclosure, when the first interface is displayed, the first video content may be played through the video player on the first interface. The first target content corresponding to the first content stream switching and associated with the first video content may be displayed through the video player in response to a detection of the first content stream switching on the first video content. The first target content is the non-video content. Therefore, different types of media content may be displayed on one interface. Even if the user browses different types of media content, such as browsing the video content first and then browsing the non-video content, the user is not required to frequently switch among different types of interfaces, thereby preventing viewing effect of the user from being interrupted, and improving the user experience.

In some embodiments of the present disclosure, the first target content may include first media content, or content in association with the first media content.

A resource format of the first target content may include at least one of a text format, an image format, or a format combining a text and an image.

In some embodiments of the present disclosure, the first target content may include content in association with the first media content.

The apparatus 900 for displaying the content may further include a third display unit. The third display unit may be configured to, after the first target content corresponding to the first content stream switching is displayed through the video player, display a first control on the video player. The first control is used to trigger a display of the first media content in a second interface.

In some embodiments of the present disclosure, the content in association with the first media content may include preview content of the first media content.

In some embodiments of the present disclosure, the apparatus 900 for displaying the content may further include a fourth display unit and a fifth display unit.

The fourth display unit may be configured to, after the first control is displayed on the video player, switch from the first interface to a second interface in response to a detection of a first triggering on the first control.

The fifth display unit may be configured to display the first media content on the second interface.

In some embodiments of the present disclosure, the apparatus 900 for displaying the content may further include a sixth display unit or a seventh display unit.

The sixth display unit may be configured to, after the first media content is displayed on the second interface, in a case where a preset area of the first media content is displayed on the second interface, display second target content corresponding to a second content stream switching through the video player, in response to a detection of the second content stream switching on the first media content. The second target content is the non-video content and is associated with the first video content.

The seventh display unit may be configured to, after the first media content is displayed on the second interface, in a case where a preset area of the first media content is displayed on the second interface, play second video content corresponding to a second content stream switching through the video player, in response to a detection of the second content stream switching on the first media content. The second video content is associated with the first video content.

In some embodiments of the present disclosure, the second display unit 920 may further be configured to, display association information corresponding to the first target content and the first media content in a first display area of the second interface. The association information includes at least one of publishing information or interaction information.

In some embodiments of the present disclosure, the apparatus 900 for displaying the content may further include an eighth display unit and a ninth display unit.

The eighth display unit may be configured to, after the first media content is displayed on the second interface, in response to a detection of a sliding on the first display area, update content displayed in the first display area in a sliding direction corresponding to the sliding.

The ninth display unit may be configured to, in a case where the association information is updated to move out of the first display area, display the association information in a second display area of the second interface.

In some embodiments of the present disclosure, the apparatus 900 for displaying the content may further include a tenth display unit and an eleventh display unit.

The tenth display unit may be configured to display a second control on the second interface, after the first media content is displayed on the second interface.

The eleventh display unit may be configured to jump back to the first interface from the second interface, in response to a detection of a second triggering on the second control, where the first interface resumes displaying the first target content.

In some embodiments of the present disclosure, the first video content and the first target content belong to a target media sequence corresponding to a target topic.

In some embodiments of the present disclosure, the apparatus 900 for displaying the content may further include a first determining unit and a second determining unit.

The first determining unit may be configured to determine an image and/or an audio related to the target topic, before the first target content corresponding to the first content stream switching is displayed through the video player.

The second determining unit may be configured to determine a background image when the video player displays the first target content, based on the image; and/or determine a background audio when the video player displays the first target content, based on the audio.

It should be noted that the apparatus 900 for displaying the content shown in Figure 9 may perform each step in the embodiment of the method shown in Figure 1, and implement each process and effect in the embodiments of the method shown in Figures 1 to 8, which are not repeated herein.

An electronic device is further provided according to an embodiment of the present disclosure. The electronic device may include a processor and a memory. The memory may be configured to store executable instructions. The processor may be configured to read the executable instructions from the memory and execute the executable instructions to perform the method for displaying the content in the foregoing embodiments.

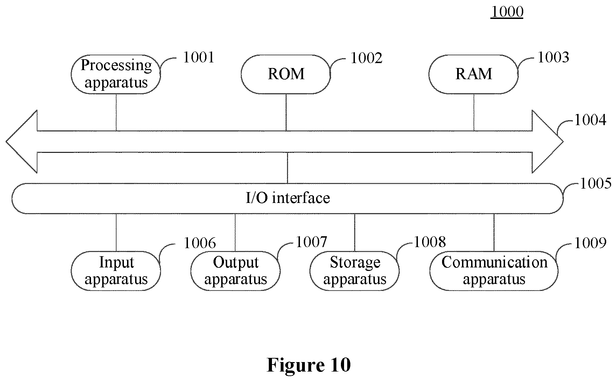

Figure 10 is a schematic structural diagram of an electronic device according to an embodiment of the present disclosure. Reference is made to Figure 10 which shows a schematic structural diagram of an electronic device 1000 for implementing the embodiments of the present disclosure.

The electronic device 1000 according to the embodiment of the present disclosure may include but is not limited to a mobile terminal, such as a mobile phone, a laptop, a digital broadcast receiver, a PDA, a PAD, a PMP, an in-vehicle terminal (such as an in-vehicle navigation terminal), and a wearable device and a fixed terminal such as a digital TV, a desktop computer, and a smart home device.

It should be noted that the electronic device 1000 shown in Figure 10 is only an example, and is not intended to limit functions and scope of the embodiments of the present disclosure.

As shown in Figure 10, the electronic device 1000 may include a processing apparatus (such as a central processor or a graphics processor) 1001, which may execute various proper operations and processing based on a program stored in a read-only memory (ROM) 1002 or a program loaded from a storage apparatus 1008 into a random-access memory (RAM) 1003. Various programs and data required for operations of the information processing device 1000 are also stored in the RAM 1003. The processing apparatus 1001, the ROM 1002, and the RAM 1003 are connected to each other through a bus 1004. An input/output (I/O) interface 1005 is also connected to the bus 1004.

Generally, the I/O interface 1005 may be connected to: an input apparatus 1006, such as a touch screen, a touch panel, a keyboard, a mouse, a camera, a microphone, an accelerometer, and a gyroscope; an output apparatus 1007, such as a liquid crystal display (LCD), a speaker, and a vibrator; a storage apparatus 1008 such as a magnetic tape and a hard disk; and a communication apparatus 1009. The communication apparatus 1009 enables wireless or wired communication between the electronic device 1000 and other devices for data exchanging. Although Figure 10 shows an electronic device 1000 having various apparatuses, it should be understood that the illustrated apparatuses are not required to all be implemented or embodied. Alternatively, more or fewer apparatuses may be implemented or included.

A computer-readable storage medium is further provided according to an embodiment of the present disclosure. The computer-readable storage medium stores a computer program. The computer program, when executed by a processor, causes the processor to perform the method for displaying the content described above.

Particularly, according to an embodiment of the present disclosure, the foregoing processes in conjunction with flow charts may be implemented as a computer software program. For example, a computer program product is further provided according to an embodiment of the present disclosure. The computer program product includes a computer program carried on a non-transitory computer-readable medium. The computer program includes program codes for performing the method shown in the flow charts. In the embodiment, the computer program may be downloaded and installed from the network via the communication apparatus 1009, or installed from the storage apparatus 1008, or installed from the ROM 1002. When the computer program is executed by the processing apparatus 1001, the foregoing functions defined in the method for displaying content according to the embodiments of the present disclosure are performed.

It should be noted that, the computer-readable medium according to the present disclosure may be a computer-readable signal medium or a computer-readable storage medium or any combination thereof. The computer-readable storage medium may include, but is not limited to, a system, an apparatus, or a device in an electronic, magnetic, optical, electromagnetic, infrared, or semi-conductive form, or any combination thereof. Concrete examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device or any suitable combination thereof. In the present disclosure, the computer-readable storage medium may be any tangible medium including or storing a program, and the program may be used by or in combination with an instruction execution system, apparatus, or device. In the present disclosure, the computer-readable signal medium may be a data signal in a baseband or transmitted as a part of a carrier wave and carrying computer-readable program codes. The transmitted data signal may be in various forms, including but not limited to an electromagnetic signal, an optical signal or any proper combination thereof. The computer-readable signal medium may alternatively be any computer-readable medium other than the computer-readable storage medium. The computer-readable signal medium may send, propagate or transmit a program for use by or use in combination with an instruction execution system, apparatus or a component. The program codes stored in the computer-readable medium may be transmitted via any proper medium including but not limited to: a wire, an optical cable, radio frequency (RF) and the like, or any proper combination thereof.

In some embodiments, a user terminal and a server may communicate in any currently known or future developed network protocol such as a HTTP, and may be interconnected with any form or medium of digital data communication (for example, communication network). The communication network includes, for example, a local area network (LAN), a wide area network (WAN), an Internet network (for example, the Internet), and an end-to-end network (for example, an ad hoc end-to-end network), and any currently known or future developed network.

The foregoing computer-readable medium may be included in the foregoing electronic device, or may exist alone without being assembled into the electronic device.

The computer-readable medium carries one or more programs. When the one or more programs are executed by the electronic device, the electronic device displays a first interface, where first video content is played through a video player on the first interface; and in response to a detection of a first content stream switching on the first video content, display first target content corresponding to the first content stream switching through the video player, where the first target content is non-video content and is associated with the first video content.

In the embodiments of the present disclosure, the computer program codes for performing the operations of the present disclosure may be written in one or more programming languages or combinations thereof. The programming languages include, but are not limited to, an object-oriented programming language, such as Java, Smalltalk, and C++, and a conventional procedural programming language, such as C language or a similar programming language. The program codes may be entirely executed on a user computer, partially on the user computer, as a standalone software package, partially on the user computer and partially on a remote computer, or entirely on the remote computer or a server. In the case of involving a remote computer, the remote computer may be connected to a user computer or an external computer (for example, the remote computer may be connected through Internet connection by an Internet service provider) through any kind of network including the local area network (LAN) or the wide area network (WAN).

Flow charts and block diagrams in the drawings show architecture, functions and operations that can be implemented by the system, method and computer program product according to the embodiments of the present disclosure. Each block in the flow charts or the block diagrams may represent a module, a program segment, or a part of codes, and the module, the program segment, or the part of codes includes one or more executable instructions for implementing the specified logical function. It should be noted that, in some alternative implementations, the functions marked in blocks may be performed in an order different from the order shown in the drawings. For example, two blocks shown in succession may actually be executed in parallel, or sometimes may be executed in a reverse order, which depends on the functions involved. It should be noted that each block in the block diagrams and/or the flow charts and a combination of blocks in the block diagrams and/or the flow charts may be implemented by using a dedicated hardware-based system for performing a specified function or operation, or may be implemented by using a combination of dedicated hardware and a computer instruction.

The units mentioned in the description of the embodiments of the present disclosure may be implemented by means of software, or otherwise by means of hardware. In some circumstances, names of units do not constitute a limitation on the units themselves.

The functions described above in the present disclosure may be performed at least in part by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logic device (CPLD) and the like.

In the context of the present disclosure, a machine-readable medium may be a tangible medium including or storing a program that is used or in combination with an instruction execution system, apparatus or device. The machine-readable medium may be a machine-readable signal medium or a machine-readable storage medium. The machine-readable medium may include, but is not limited to, a system, an apparatus or a device in an electronic, magnetic, optical, electromagnetic, infrared, or semi-conductive form, or any combination thereof. Concrete examples of the machine-readable storage medium may include, an electrical connection with one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device or any suitable combination thereof.

The above description includes merely preferred embodiments of the present disclosure and explanations of technical principles used. Those skilled in the art should understand that the scope of the present disclosure is not limited to technical solutions formed by a specific combination of the above technical features, but covers other technical solutions formed by any combination of the above technical features or equivalent features thereof without departing from a concept of the present disclosure. For example, technical solutions are formed by replacing the above features with the technical features (but not limited to) with similar functions disclosed in the present disclosure.

In addition, although the operations are described in a specific order, this should not be understood as requiring these operations to be performed in the specific order shown or in a sequential order. Under certain circumstances, multitasking and processing in parallel may be advantageous. In addition, although several specific implementation details are included in the above discussion, these should not be interpreted as limiting the scope of the present disclosure. Some features described in the context of individual embodiments may further be implemented in combination in one embodiment. In addition, various features described in the context of a single embodiment may be implemented in multiple embodiments individually or in any suitable sub-combination.

Although the subject matter is described in language specific to structural features and/or logical actions of methods, it should be understood that the subject matter defined in the claims is not limited to the specific features or actions described above. In addition, the specific features and actions described above are merely examples for implementing the claims.

## Claims

1. A method for displaying content, comprising:
displaying a first interface, wherein first video content is played by a video player on the first interface; and
displaying first target content corresponding to a first content stream switching by the video player, in response to a detection of the first content stream switching on the first video content, wherein the first target content is non-video content and is associated with the first video content.

2. The method according to claim 1, wherein the first target content comprises first media content or content in association with the first media content, and
wherein a resource format of the first target content comprises at least one of a text format, an image format, or a format combining a text and an image.

3. The method according to claim 1, wherein the first target content comprises content in association with first media content, wherein after the displaying first target content corresponding to the first content stream switching by the video player, the method further comprises:
displaying a first control on the video player, wherein the first control is used to trigger a display of the first media content in a second interface.

4. The method according to claim 2 or 3, wherein the content in association with the first media content comprises preview content of the first media content, or association information corresponding to the first target content, and
wherein the association information comprises at least one of publishing information of the first media content or interaction information of the first media content.

5. The method according to claim 3, wherein after the displaying the first control on the video player, the method further comprises:
switching from the first interface to a second interface, in response to a detection of a first triggering on the first control; and
displaying the first media content on the second interface.

6. The method according to claim 5, wherein after the displaying the first media content on the second interface, the method further comprises:
in a case where a preset area of the first media content is displayed on the second interface, displaying second target content corresponding to a second content stream switching through the video player, in response to a detection of the second content stream switching on the first media content, wherein the second target content is the non-video content and is associated with the first video content; or
in a case where a preset area of the first media content is displayed on the second interface, playing second video content corresponding to a second content stream switching through the video player, in response to a detection of the second content stream switching on the first media content, wherein the second video content is associated with the first video content.

7. The method according to claim 5, wherein the displaying the first media content on the second interface comprises:
displaying association information corresponding to the first target content and the first media content in a first display area of the second interface, wherein the association information comprises at least one of publishing information or interaction information.

8. The method according to claim 7, wherein after the displaying the first media content on the second interface, the method further comprises:
updating content displayed in the first display area in a sliding direction corresponding to a sliding, in response to a detection of the sliding on the first display area; and
in a case where the association information is updated to move out of the first display area, displaying the association information in a second display area of the second interface.

9. The method according to any one of claims 5 to 8, wherein after the displaying the first media content on the second interface, the method further comprises:
displaying a second control on the second interface; and
jumping back to the first interface from the second interface, in response to a detection of a second triggering on the second control, wherein the first interface resumes displaying the first target content.

10. The method according to claim 1, wherein the first video content and the first target content belong to a target media sequence corresponding to a target topic.

11. The method according to claim 10, wherein before the displaying the first target content corresponding to the first content stream switching by the video player, the method further comprises:
determining an image and/or an audio related to the target topic; and
determining a background image when the video player displays the first target content, based on the image; and/or determining a background audio when the video player displays the first target content, based on the audio.

12. The method according to claim 10 or 11, wherein before the displaying the first interface, the method further comprises:
displaying the target topic on a third interface; and
displaying a first interface corresponding to the target topic, in response to a third triggering on the target topic.

13. The method according to claim 1, further comprising:
displaying third target content corresponding to a third content stream switching through the video player, in response to the third content stream switching on the first target content.

14. An apparatus for displaying content, comprising:
a first display unit configured to display a first interface, wherein first video content is played by a video player on the first interface; and
a second display unit configured to display first target content corresponding to a first content stream switching by the video player, in response to a detection of the first content stream switching on the first video content, wherein the first target content is non-video content and is associated with the first video content.

15. An electronic device, comprising:
a processor; and
a memory configured to store executable instructions;
wherein the processor is configured to read the executable instructions from the memory and execute the executable instructions to implement the method for displaying the content according to any one of claims 1 to 13.

16. A computer-readable storage medium, wherein the computer-readable storage medium stores a computer program, and the computer program, when executed by a processor, causes the processor to implement the method for displaying the content according to any one of claims 1 to 13.
